# EUROPEAN PATENT APPLICATION

(11) **EP 4 575 407 A1**
(43) Date of publication of application: **25.06.2025**
(21) Application number: 23218844.1
(22) Date of filing: 20.12.2023
(51) Int. Cl.: G01C 21/34, G08G 1/01

(54) **SYSTEMS AND METHODS FOR JOURNEY TIME ANALYSIS**

(71) Applicant: TomTom Traffic B.V., 1011 AC Amsterdam (NL)
(72) Inventor: BERGHÄUSER, Gunnar, 1011 AC Amsterdam (NL)
(74) Representative: Meier, Florian

(57) **Abstract**

There is provided systems of method for predicting journey times for a user traversing a route. One such method comprises: calculating a plurality of potential journey times for the route, said calculating comprising, for each potential journey time of the plurality: stochastically generating a respective route state for the route, wherein a route state comprises for each road segment of the route, a respective traffic state for said road segment selected from a plurality of traffic states, and determining said potential journey time of the route state wherein the potential journey time is based on a driving profile of the user and the traffic states of the road segments of the respective route state. The method further comprises predicting the journey time for user traversing the route based on the plurality of potential journey times for the route.

## Description

### Field of the invention

The present invention relates to route planning, and in particular determination of journey times.

### Background of the invention

Journey planner systems assist users in traveling from a start point (or initial location) to a destination location. Such journey planner systems usually determine a potential route, or more commonly multiple potential routes, between the initial location and the destination location. This allows a user to identify the most optimal way to get to a particular destination. Such journey planner systems are often also used in conjunction with (or feature as part of) navigational guidance systems, which can then aid the user in following the particular route. Often navigational guidance can be in the form of turn-by-turn instructions, or other such indications to the user of what action to take to follow the route based upon the user's current location.

Such journey planning systems have become popular with users not only for aiding in navigation to and from unfamiliar locations, but also in determining more suitable (or efficient) routes between known locations. Similarly, the use of such navigational guidance systems has expanded beyond personal motor vehicles and such systems are now routinely used by users of many other modes of transport including commercial vehicles (such as large goods vehicles, commercial passenger transport vehicles), pedal cycles and even as navigational aids to pedestrian travel. In this way journey planner systems now routinely offer mixed mode routing options.

An important aspect of journey planner systems is the provision of accurate estimates of journey times. As the routes provided to the users are typically ones which the user is unfamiliar with, user often rely heavily on the journey time estimates generated by the journey planner systems for said routes. When these are accurate they enable users to set off at the appropriate time to reach their destination at a desired arrival time, ensuring events are not missed.

Existing journey time estimation techniques however usually rely on travel time statistics, from data traces of numerous similar journeys completed by other users. In order to have enough traces to generate meaningful statistics these include user with all kinds of transport preferences and behaviours. These include vastly different driving styles and vehicle types - e.g. from trucks to fast driving cars and motorbikes. This can result in an unrealistically broad variance in predictions, along with inaccurate predictions for many users, who depart form the global average transport behaviour. In particular, such approaches often over estimate travel time for relatively fast drives whilst under estimating travel times for relatively slow drivers.

### Summary of the invention

It is an object of the invention to provide systems and methods for calculating (or predicting) journey times for a user that address the issues set out above. In particular, it has been realized in the invention that by stochastically generating a distribution of potential journey times for a route according to the users driving behaviour and the likely traffic states encountered on the route an accurate journey time estimation for the user can be generated. This method can be used even where the user has not traversed all or any of the route previously and thus no user specific statistics on traversal time are available.

According to a first aspect of the invention, there is provided a method of predicting (or estimating, or otherwise calculating) a journey time for a user traversing a route. The journey time may be or be represented as travel time, an arrival time, and earliest departure time and so on. The route comprises a plurality of road segments. The method comprises calculating a plurality of potential journey times (or a journey time distribution) for the route. Said calculating comprises generating a respective potential route state for the route. A potential route state comprises (or indicates) for each road segment of the route, a respective traffic state for said road segment. The respective traffic state is selected from a plurality of traffic states. It will be understood that such selection is typically a stochastic process. Said calculating also comprises determining a potential journey time of the potential route state, wherein the potential journey time is based on a user transport profile (such as a driving profile) of the user and the traffic states of the road segments of the respective route state.

The steps of generating a respective potential route state and determining a potential journey time of the potential route state are carried out repeatedly so as to provide the plurality of potential journey times. As such it may be considered that the steps of generating a respective potential route state and determining a potential journey time of the potential route state are carried out for each potential journey time of the plurality of potential journey times. Further potential journey times (from further generated potential route states) may be calculated until a convergence threshold is reached. The convergence threshold comprises any of: convergence criteria for the distribution of the plurality of potential journey times; a predetermined number of potential journey times; or a predetermined variance of the plurality of potential journey times.

The method also comprises predicting (or estimating or otherwise calculating) the journey time for user traversing the route based on the plurality of potential journey times (or the journey time distribution) for the route.

Typically, said generating a respective potential route state comprises, for each road segment of a potential route state, selecting the respective traffic state for said road segment from the plurality of traffic states, based on a traffic state probability (or a traffic state probability distribution) associated with said road segment. The traffic state probability (or probability distribution) associated with at least one road segment may dependent on at least the traffic state of another road segment (such as a previous road segment) of the potential route state. Additionally, or alternatively, the traffic state probability (or probability distribution) associated with at least one road segment is dependent on at least one of: a predicted time of day for traversing the road segment; predicted weather conditions for the road segment; or a known event associated with the road segment.

The plurality of route states typically comprise one or more non-limiting (or unconfined) traffic states and one or more limiting (or confined) traffic states. The one or more limiting traffic states may be any of: congested traffic, or synchronized traffic.

In some embodiments of the first aspect said determining is based at least in part on a respective road restriction (or attribute) for at least one of the road segments in a non-limiting traffic state. The road restriction is any of: a speed restriction, a traffic control system, a road class (or type), or a road condition

In some embodiments of the first aspect the step of predicting comprises calculating an indication of confidence for the journey time for user traversing the route. The indication of confidence may be any one of: a confidence interval; or a likelihood of the user traversing the route within the journey time.

The user transport profile is typically a driving profile. The driving profile of the user may comprise any of: the mode of transport of the user; the vehicle of the user; or a driver behaviour of the user.

According to a second aspect of the invention, there is provided a system adapted to carry out above-mentioned first aspect or any embodiment thereof. To that end there is provided a system for predicting (or estimating, or otherwise calculating) a journey time for a user traversing a route. The system comprising a memory and one or more processors configured to carry out the step of calculating a plurality of potential journey times (or a journey time distribution) for the route. Said calculating comprises generating a respective potential route state for the route. A potential route state comprises (or indicates) for each road segment of the route, a respective traffic state for said road segment. The respective traffic state is selected from a plurality of traffic states. It will be understood that such selection is typically a stochastic process. Said calculating also comprises determining a potential journey time of the potential route state, wherein the potential journey time is based on a user transport profile (such as a driving profile) of the user and the traffic states of the road segments of the respective route state.

The memory and the one or more processors are also configured to carry out the step of predicting (or estimating or otherwise calculating) the journey time for user traversing the route based on the plurality of potential journey times (or the journey time distribution) for the route.

According to a third aspect of the invention, there is provided a computer program which, when executed by one or more processors, causes the one or more processors to carry out the above-mentioned first aspect or any embodiment thereof. The computer program may be stored on a computer readable medium.

### Brief description of the drawings

Embodiments of the invention will now be described, by way of example only, with reference to the accompanying drawings, in which:
Figure 1 schematically illustrates an example of a computer system;
Figure 2a schematically illustrates an example network of navigable elements in a geographic area is shown along with a journey time estimation system;
Figure 2b is a flowchart illustrating a method that may be performed by the system of figure 2a.
Figure 3 shows an example of a route and the calculation of a potential journey time for the route.
Figure 4 illustrates a plurality of navigation clients located within a network of navigable elements along with a navigation data processing system that may be used with embodiments of the invention;
Figure 5 shows an example output of systems and methods of the invention.

### Detailed description of embodiments of the invention

In the description that follows and in the figures, certain embodiments of the invention are described. However, it will be appreciated that the invention is not limited to the embodiments that are described and that some embodiments may not include all of the features that are described below. It will be evident, however, that various modifications and changes may be made herein without departing from the broader spirit and scope of the invention as set forth in the appended claims.

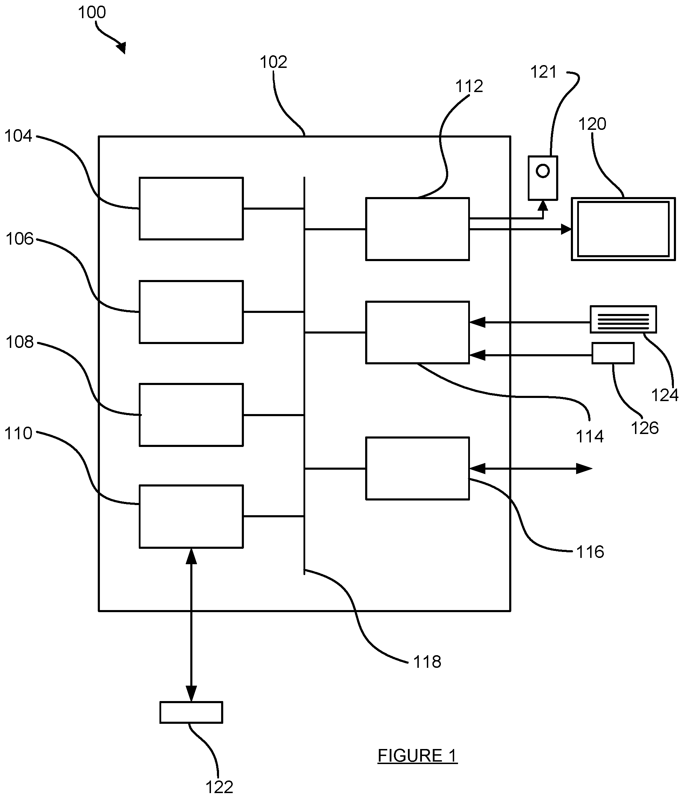

Figure 1 schematically illustrates an example of a computer system 100. The system 100 comprises a computer 102. The computer 102 comprises: a storage medium 104, a memory 106, a processor 108, an interface 110, a user output interface 112, a user input interface 114 and a network interface 116, which are all linked together over one or more communication buses 118.

The storage medium 104 may be any form of non-volatile data storage device such as one or more of a hard disk drive, a magnetic disc, an optical disc, a ROM, etc. The storage medium 104 may store an operating system for the processor 108 to execute in order for the computer 102 to function. The storage medium 104 may also store one or more computer programs (or software or instructions or code).

The memory 106 may be any random access memory (storage unit or volatile storage medium) suitable for storing data and/or computer programs (or software or instructions or code).

The processor 108 may be any data processing unit suitable for executing one or more computer programs (such as those stored on the storage medium 104 and/or in the memory 106), some of which may be computer programs according to embodiments of the invention or computer programs that, when executed by the processor 108, cause the processor 108 to carry out a method according to an embodiment of the invention and configure the system 100 to be a system according to an embodiment of the invention. The processor 108 may comprise a single data processing unit or multiple data processing units operating in parallel or in cooperation with each other. The processor 108, in carrying out data processing operations for embodiments of the invention, may store data to and/or read data from the storage medium 104 and/or the memory 106.

The interface 110 may be any unit for providing an interface to a device 122 external to, or removable from, the computer 102. The device 122 may be a data storage device, for example, one or more of an optical disc, a magnetic disc, a solid-state-storage device, etc. The device 122 may have processing capabilities - for example, the device may be a smart card. The interface 110 may therefore access data from, or provide data to, or interface with, the device 122 in accordance with one or more commands that it receives from the processor 108.

The user input interface 114 is arranged to receive input from a user, or operator, of the system 100. The user may provide this input via one or more input devices of the system 100, such as a mouse (or other pointing device) 126 and/or a keyboard 124, that are connected to, or in communication with, the user input interface 114. However, it will be appreciated that the user may provide input to the computer 102 via one or more additional or alternative input devices (such as a touch screen). The computer 102 may store the input received from the input devices via the user input interface 114 in the memory 106 for the processor 108 to subsequently access and process, or may pass it straight to the processor 108, so that the processor 108 can respond to the user input accordingly.

The user output interface 112 is arranged to provide a graphical/visual and/or audio output to a user, or operator, of the system 100. As such, the processor 108 may be arranged to instruct the user output interface 112 to form an image/video signal representing a desired graphical output, and to provide this signal to a monitor (or screen or display unit) 120 of the system 100 that is connected to the user output interface 112. Additionally, or alternatively, the processor 108 may be arranged to instruct the user output interface 112 to form an audio signal representing a desired audio output, and to provide this signal to one or more speakers 121 of the system 100 that is connected to the user output interface 112.

Finally, the network interface 116 provides functionality for the computer 102 to download data from and/or upload data to one or more data communication networks.

It will be appreciated that the architecture of the system 100 illustrated in figure 1 and described above is merely exemplary and that other computer systems 100 with different architectures (for example with fewer components than shown in figure 1 or with additional and/or alternative components than shown in figure 1) may be used in embodiments of the invention. As examples, the computer system 100 could comprise one or more of: a personal computer; a server computer; a mobile telephone; a tablet; a laptop; a television set; a games console; other mobile devices or consumer electronics devices; in-car entertainment system; etc.

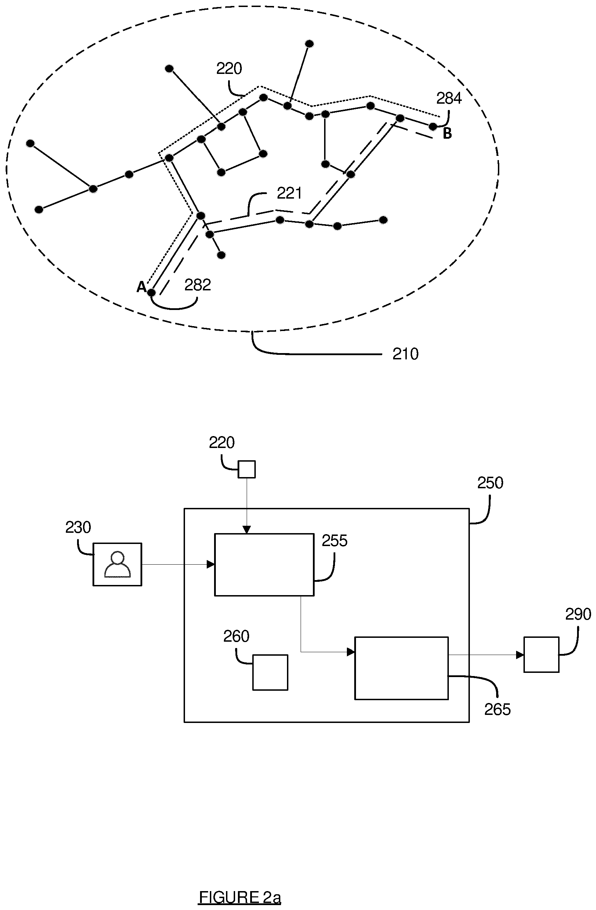

In figure 2a, an example network 210 of navigable elements in a geographic area is shown (the navigable elements being represented by respective lines connected at dots). As discussed below, the network 210 may be represented as an electronic map, for example, an electronic map describing a road network 210 in a geographic area. The network 210 may be a subnetwork of a larger network of navigable elements (i.e. a portion or area from a larger map). It will be appreciated that the specific network 210 illustrated is merely an example, and that in practice the network 210 may comprise many more navigable elements in a variety of configurations. In figure 2a, the dots represent connections (or junctions) between, or end-points of, respective navigable elements. As mentioned, the "navigable elements" may be roads and/or portions/segments of roads, with the network 210 then being a road network. It will be appreciated, though, that other types of "navigable element" exist, e.g. routes, or parts thereof, taken by ferries or trains; paths, or parts thereof, for pedestrians; cycle paths or parts thereof etc. Thus, a navigable element may be viewed as a part of a transport network along which travel may be conducted, e.g. by a vehicle, a person, etc. In figure 2a, the navigable elements are shown as being undirected (i.e. travel may be conducted in both ways along the navigable element).

Electronic maps of such navigable elements may be used by routing (or journey planning) systems to generate (or construct) potential routes between locations. Such potential routes are often used by user to plan their journeys, so as to find the most optimal route from their start location to their desired destination. Such routes may additionally, or alternatively, be used by navigational systems to aid the user in navigation, often by providing turn-by-turn navigation instructions enabling the user to follow (or traverse) the route.

Figure 2a also shows two potential routes 220; 221. Each route 220; 221 is between an initial location 282 and a destination location 284. A route 280 comprises a plurality of navigational elements. In the discussion that follows the network 210 is assumed to be a road network, so that the navigational elements are road segments. However, it will be appreciated that the invention need not be limited to road networks and road segments and may be applied to any network of navigable elements. The plurality of road segments (or navigable elements) form a path between the initial location 282 and the destination location 284.

In other words, a route 220; 221 comprises a sequence of connected road segments (or other navigable elements). The route 220; 221 has a start location 282 and a destination location 284.

In the example scenario in figure 2a a user requires a journey time estimate for the potential routes 220; 221. To that end there is provided a journey time estimation system 250.

The journey time estimation system 250 comprises a distribution generator module 255, and a prediction module 265. The journey time estimation system 250 may be implemented on a computer system such as the computer system 100 described above.

The distribution generator 255 is arranged to receive a route 220; 221. The distribution generator 255 is arranged to receive a user transport profile 230, described in more detail shortly below. The distribution generator 255 is also arranged to calculate a plurality of potential journey times 260 for the route 220; 221. Here it will be appreciated that a journey time represents the time taken to traverse a route by a user. As such a potential journey time is a possible time that a user may take to traverse a route. A journey time may be represented in numerous different ways. For example, a journey time may be represented as an absolute time taken. Equally, a journey time may be represented as an arrival time. In such cases, where the departure time is known the arrival time would specify the journey time.

As will be understood, a road segment will be subject to traffic. In other words, one or more vehicles may be present on the road segment. Each vehicle may be moving or stationary, as such it will be appreciated that each vehicle will be in a movement state. These vehicles and the respective movement states may be termed traffic. The effect of such traffic may be to constrain the speed of traversal of the road segment. As such, it will be understood that a given road segment at a given time will be in a particular traffic state.

For example, the number of vehicles may be at (or near) the road segment's capacity, and the vehicles may be moving slowly. In that case traversal of the road segment may only be possible at or below a particular speed. Such a traffic state may be termed a "congested traffic state". It will be understood that the constraint imposed by a traffic state may be (or effect) a minimum speed. In other words, the traffic state may prevent traversal of a road segment below a certain speed. For example, the number of vehicles may be at (or near) the road segment's capacity, and the vehicles may be moving in a synchronized manner. In particular, on multi-lane road segments such synchronized traffic flow, where the vehicles in all lanes are moving at substantially the same speed. Equally, some traffic states may in effect comprise (or impose) a constraint of both a maximum and minimum speed. A traffic state that imposes (or comprises or is characterized by) a constraint on the traversal of the road segment may be termed a limiting (or constrained) traffic state.

It will be appreciated that some traffic states may impose no constraint on a given road segment. For example, the number of vehicles may be substantially below the road segment's capacity (or effectively zero). In that case the traffic state may impose no constraint on the speed at which a vehicle may traverse the road segment. The speed at which a vehicle may traverse the road segment may instead be constrained by other factors, discussed shortly below, such as physical attributes of the road segment, vehicle characteristics, user driving behavior and so on. Such traffic states that do not impose a constraint on the traversal of the road segment may be termed a non-limiting (or un-constrained or free) traffic state.

As such, a traffic state may be a limiting (or constrained) traffic state, or a non-limiting (or unconstrained) traffic state. Examples of limiting traffic states include any of: congested traffic; synchronized traffic; stationary traffic. Examples of non-limiting traffic states include any of: no traffic; low (or light) traffic.

As set out above a route 220; 221 comprises a sequence of connected road segments (or other navigable elements). For a given traversal of a route 220; 221 each road segment will be in a respective traffic state. It will therefore be understood that for a given traversal (or journey) of a route the route will be in a particular route state. Said route state comprising (or being defined at least in part by) the respective traffic states of each road segment of the route. In other words, the route state may comprise or indicate the traffic states of the road segments of the route for a given journey.

As part of calculating a plurality of potential journey times 260 the distribution generator 255 is arranged to generate potential route states for the route 220. In particular, the distribution generator 255 is arranged to generate a potential route state by selecting a respective traffic state for each road segment of the route 220. The traffic state for a given road segment is typically selected according to a probability distribution of traffic states for said segment. It will be understood that a given road segment may be in a particular traffic state with a particular likelihood (or probability). Such probabilities may be determined (or observed) based on historical traffic data for said road segment as described shortly below. The probabilities may depend on (or be a function of) parameters (or external factors) such as: time of day, the traffic states of adjacent (or nearby) road segments; weather conditions; events (such as nearby public events). As such, the selection of the traffic state for a given road segment may be thought of as sampling (or stochastic sampling) of the traffic state according to said probabilities (or said probability distribution).

Similarly, it will be appreciated that generating a route state may be thought of as sampling a route state from a probability distribution of route states for the route. In generating the route state by sampling the traffic states of each road segment the probability distribution for the route states themselves does not have to be directly calculated or determined.

The distribution generator 255 is arranged to determine a potential journey time for a route state. In particular, the distribution generator 255 is arranged to determine said potential journey time based on the user transport profile 230 and the traffic states of the road segments from the route state. A user transport profile 230 (or driving profile in this example) indicates (or specifies) user driving behavior for one or more traffic states. For example, a driving profile may specify that in a non-limiting traffic state the user will (or will attempt to) drive at the speed limit of the road segment. Alternatively, the user driving profile may indicate that the user will (or will attempt to) not exceed a particular speed, unless in a limiting traffic state.

As such, the distribution generator 255 is typically arranged to determine respective a transit (or traversal time) for the user to traverse each road segment of the route based on the user transport profile and the respective traffic state of the road segment in the route state. The potential journey time may be the sum of the respective transit times.

The distribution generator 255 is typically arranged to generate a plurality of potential journey times 260 corresponding to a plurality of potential route states. As the route states are, in effect, sampled from a probability distribution of route states the plurality of potential journey times represent (or are distributed according to) the probability distribution.

The prediction module 265 is arranged to predict (or estimate or otherwise calculate) the journey time 290 for the user traversing the route based on the plurality of potential journey times 260. As set out above the plurality of potential journey times 260 are distributed according to an approximate (or estimated) probability distribution of the route states a user will encounter traversing the route 220; 221. As such, the predicted journey time 290 may be determined from the plurality of potential journey times 260 in a number of different ways depending on the type (or nature) of the prediction required.

For example, the predicted journey time 290 may be (or comprise) any of:
- the mode journey time of the plurality, indicating the most likely journey time for the user;
- the mean journey time of the plurality, indicating the central estimate journey time for the user;
- the output of the quantile function for a given probability p, indicating the maximum journey time at a given probability (or confidence). For example, where *p* = 0.95 the output of the quantile function would be the maximum journey time at 95% confidence.

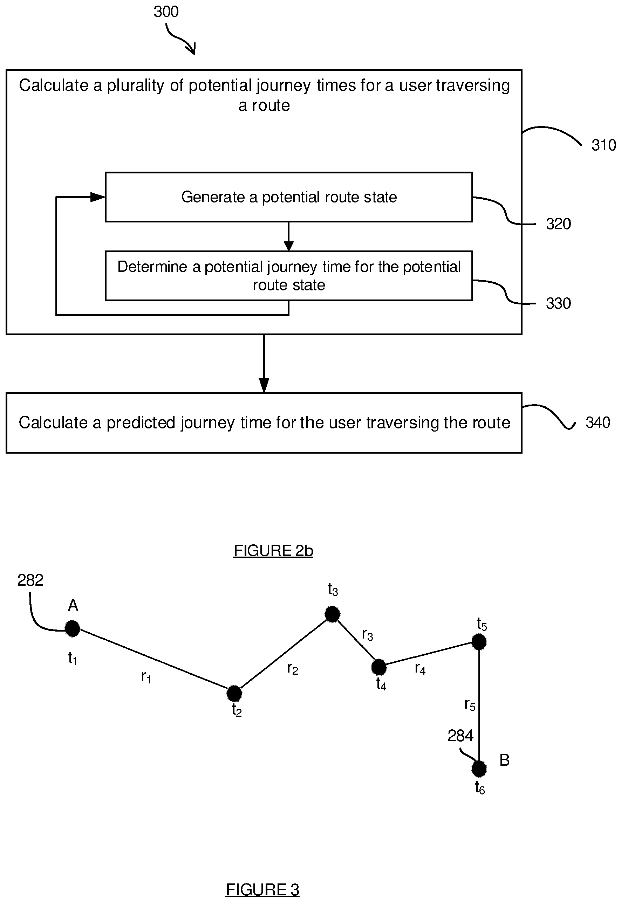

Figure 2b is a flowchart illustrating a method 300 that may be performed by the system 250 of figure 2a.

At a step 310 a plurality of potential journey times for a user traversing a route are calculated. The plurality of potential journey times may be in the form of (or be represented as) a journey time distribution. The journey time distribution may be or comprise a probability distribution of the potential journey times. Equally, the journey time distribution may be or comprise a cumulative distribution function of the potential journey times. Each potential journey time may be represented by (or take the form of) a potential absolute time taken for the user to traverse the route. Equally, however it will be appreciated that a potential journey time may be represented by (or take the form of) an arrival time. Here the arrival time would be the potential arrival time of the user at the destination location 284 of the route 220 having started at a pre-determined start (or departure) time at the start location 282. Similarly the potential journey time may be represented by (or take the form of) a start (or departure) time. Here the start time would be the potential start time of the user from the start location 282 in order to travers the route by a pre-determined arrival time.

The step 310 comprises the sub step 320. At the sub step 320 a potential route state for the route is generated. The potential route state is generated stochastically, by selecting a respective a respective traffic state for each road segment of the route from a plurality of traffic states. The respective traffic state for a road segment is selected based on one or more traffic state probabilities for the road segment. The one or more road segment probabilities may be in the form of a traffic state probability distribution for the road segment. The one or more road segment probabilities may be dependent on (or a function of) the traffic state of an adjacent road segment. The one or more road segment probabilities are typically dependent on (or a function of) the time of day of traversal of the road segment. The time of day of traversal of the road segment may be determined as part of the sub step 320 based on the traversal time times of the road segments between said road segment and the start (or destination) location of the route. The step 320 typically comprises calculating a traversal time of the road segment based on the selected traffic state of the road segment and a user profile.

Where a road segment is in a non-limiting traffic state the traversal time of the road segment may be calculated (or determined) based on the user profile and one or more road attributes (or restrictions) of the road segment. Examples of road restrictions include any of: a speed restriction, a traffic control system, a road class, a road condition, and so on.

The step 310 comprises the sub step 330. At the sub step 330 a potential journey time for the potential route state is determined. The potential journey time is usually determined based on the driving profile of the user and the traffic states of the road segments of the route state. In some cases, the step 330 may comprise summing the traversal times generated in the step 320. In this way the steps 320 and 330 may be though of as being carried out concurrently in some embodiments, with the step 330 determining the traversal times used in the iterative process in the step 320. Alternatively, the step 330 may be carried out after the step 320 has completed and may comprise determining traversal times for each road segment of the route based on the respective selected traffic states and the user profile.

It will be appreciated that the sub steps 320 and 330 are carried out multiple times (typically iterated) in order to generate the plurality of potential journey times. Potential journey times are usually calculated until a convergence threshold is reached. The convergence threshold may comprise any of: a predetermined number of potential journey times; a predetermined variance of the plurality of potential journey times. In this way it will be appreciated that the sub steps 320 and 330 are usually iterated until the distribution of the plurality of potential journey times has reached a pre-defined convergence.

At a step 340 a journey time for the user traversing the route is calculated based on the plurality of potential journey times for the route. The step 340 may comprise providing the journey time as output (or for display). The output may comprise the probability distribution of the potential journey times. The output may comprise a cumulative distribution function of the potential journey times. It will be understood that the journey time provided in the step 340 may be in the form of a predicted arrival time at the destination. Additionally, or alternatively the journey time provided in the step 340 may be in the form of a suggested (or required) departure time for the user, based on a required arrival time. The required arrival time may have been provided by the user. The step 340 may comprise calculating (or otherwise determining) indication of confidence for the journey time. The indication of confidence may be or comprise any of: a confidence interval; a likelihood of the user traversing the route within the journey time. It will be appreciated that such indications of confidence can be determined from probability distributions such as the distribution of journey times by standard statistical methods.

It will also be appreciated that the step 310 may be repeated for more than one route. In this way the step 340 may provide an output (such as a predicted journey time) for each route. As such the user will be able to select an appropriate route. For example, if a user requires certainty of arrival time the user may pick a route which has a longer journey time but with a higher indication of confidence.

Figure 3 shows an example of a route and the calculation of a potential journey time for the route.

As shown in figure 3 the route 220 has five road segments. For ease of reference these road segments will be referred to as *rᵢ* where 1 ≤ *i* ≤ 5. In this example a potential route state is to be generated. The journey is assumed to start at an initial time *t*₁. A traffic state *S*₁ for the first road segment *r*₁ is selected. As discussed above the traffic state is selected (or sampled) according to a probability distribution of possible traffic states for the particular road segment. The probability distribution may be determined or observed for the road segment based on historical journey data. In other words the traffic state is chosen randomly (or pseudo randomly) from the plurality of potential traffic states in the probability distribution. Random (or pseudo random) choice however follows the probability distribution such that in the limit of a large number of such choices the chosen traffic states will reproduce the probability distribution. It will be appreciated that such a selection may be performed using the probability distribution directly. Alternatively, the selection may be performed using the respective probabilities of each state in the plurality occurring.

It will also be understood that the selected traffic state *S*₁ is either a limiting traffic state or non-limiting traffic state. As such the selection of the traffic state may first comprise determining if the traffic state is a limiting state or non-limiting state, according to a probability of the state being limiting (or non-limiting) for that road segment. If the state is determined to be limiting, then a further calculation can be made to determine (or select) which limiting state the road segment is in. Such further calculation may be based on one or more limiting state probabilities, or a probability distribution of limiting states.

As set out above the probability distribution (or distributions) for selecting the traffic state for a road segment may depend on external factors such as time of day, the traffic states of adjacent (or nearby) road segments; weather conditions; events (such as nearby public events). For example, the probability distribution used to select the traffic state for the first road segment may depend on time of day. As such the probability distribution may be selected (or modified) based on the initial time *t*₁.

Having selected the traffic state *S*₁ for the first road segment *r*₁ the traffic states for the subsequent road segments are usually selected in an iterative manner. For example, the traffic state *S*₂ for the second road segment *r*₂ may be selected (or sampled) according to a probability distribution of possible traffic states for the second road segment *r*₂. The selection of the traffic state *S*₂ for the second road segment *r*₂ may proceed in the same way as the selection of the traffic state *S*₁ for the first road segment *r*₁. However, it will be appreciated that the probability distribution for the second road segment *r*₂ may be dependent on the traffic state *S*₁ selected for the first segment *r*₁. In other words, the traffic state *S*₂ for the second road segment *r*₂ may be corelated with the traffic state *S*₁ for the first road segment *r*₁. For example, if the first road segment *r*₁ is in a "congested" traffic state it may be that the second road segment *r*₂ has an increased likelihood of being in a congested state. In particular for some road networks the traffic state of a previous (or adjacent or nearby) road segment may fully determine the traffic state for a particular road segment. For example, the second road segment *r*₂ may be prone to traffic jams (or "stationary traffic"). As such it may be that if the first road segment *r*₁ is in a "stationary traffic" state then the second road segment *r*₂ is always in a "stationary traffic" state (as in reality it is an obstruction in the second road segment *r*₂ that causes the stationary traffic in the previous road segment).

Similarly, the probability distribution used to select the traffic state for the second road segment *r*₂ may depend on time of day. As such, the time taken to traverse the first road segment *r*₁ in the first selected traffic state *S*₁ may be determined based on the user profile as set out above. This may then establish the time *t*₂ at which the user would arrive at the second road segment *r*₂. As such the probability distribution may be selected (or modified) based on the arrival time at the second road segment *t*₂.

In the typical iterative manner, the traffic state *Sₙ* for an arbitrary road segment *rₙ* is selected according to a probability distribution of possible traffic states for the n^{th} road segment. The probability distribution for the n^{th} road segment may be dependent on the traffic state S_{*n*-1} for the previous road segment *r*_{*n*-1} and/or based on the arrival time *tₙ* at start of the n^{th} road segment. This arrival time itself typically being determined based on the user profile and the traffic states of the previous road segments.

As such the route state may be determined (or generated) as a Markov chain, with each Markov state comprising the traffic state of the previous road segment and, optionally, the arrival time at the current road segment.

In this way a given potential route state may be generated. The potential journey time for the potential route state is typically determined by summing the transit times for each road segment in the journey. As set out above, in some cases these transit times will have been generated as part of generating the route state. In other cases, the transit times for each road segment can be calculated after the route state has been generated based on the selected traffic state for the road segment and the user profile.

It will be appreciated that the iterative approach to generating the route state and therefore the potential journey time above may be carried out in reverse. In particular, the chain may be generated from the destination location B backwards along the route and in time.

For example, a traffic state *S*₅ may be selected for the last road segment *r*₅ at a proposed arrival time *t*₆. The transit time for the user traversing the road segment *r*₅ would then be determined in the usual way, however this would be subtracted from the arrival time *t*₆ to give the arrival time *t*₅ at the end of the penultimate road segment *r*₄. Then the traffic state *S*₄ for the penultimate road segment *r*₄ may be selected using the appropriate probability distribution for the time *t*₄ and optionally the traffic state *S*₅ of the adjacent road segment. In the typical iterative manner the traffic state *Sₙ* for an arbitrary road segment *rₙ* is selected according to a probability distribution of possible traffic states for the n^{th} road segment. The probability distribution for the n^{th} road segment may be dependent on the traffic state *S*_{*n*+1} for the previous road segment *r*_{*n*+1} and/or based on the arrival time *t*_{*n*+1} at the end of the n^{th} road segment.

As set out above by generating a plurality of route states, and therefore a plurality of potential journey times in this way the plurality of journey times may form a journey time distribution. Further route states and corresponding journey times are then typically generated until suitable convergence of the journey time distribution is reached. A suitable convergence may be defined as meeting a convergence threshold. The convergence threshold may be any one or more of: a predetermined number of potential journey times; a predetermined variance of the plurality of potential journey times.

In effect the methods of the invention allow a user specific journey time distribution to be generated for a given route. This can be done even when the particular user has never traveled along any of the road segments of the route. In particular the general traffic state distribution known for each road segment, typically derived from a whole population of users, are sampled in conjunction with a particular user profile enabling the user specific journey time distribution to be generated instead of a general population journey time distribution.

It will be appreciated that suitable traffic state probability distributions for use with the systems and methods above may be derived (or calculated) using data acquired form known traffic monitoring systems. Such traffic monitoring systems may include various sensors (such as movement or pressure sensors) positioned on or near the roadway. The sensors are arranged to detect the presence or movement of vehicles. In this way various properties of traffic flow (such as speed, rate, density etc) may be determined. The traffic flow may then be categorized into one or more traffic states. A traffic state probability distribution may then be calculated based on the occurrence of the traffic states for the particular road segment. As discussed above, the traffic state probability distribution may depend on external factors (or parameters) such as time of day, the traffic states of adjacent (or nearby) road segments; weather conditions; events (such as nearby public events. As such, separate traffic state probability distributions may be calculated for different values of such parameters. Additionally, or alternatively a traffic state probability distribution may be parameterized based on one or more of these parameters such that the traffic state probability distribution is a function of the one or more parameters.

It will be appreciated that instead of, or as well as, such fixed position sensor data, probe data from vehicles in the traffic flow itself may also be used to determine the traffic state probability distributions.

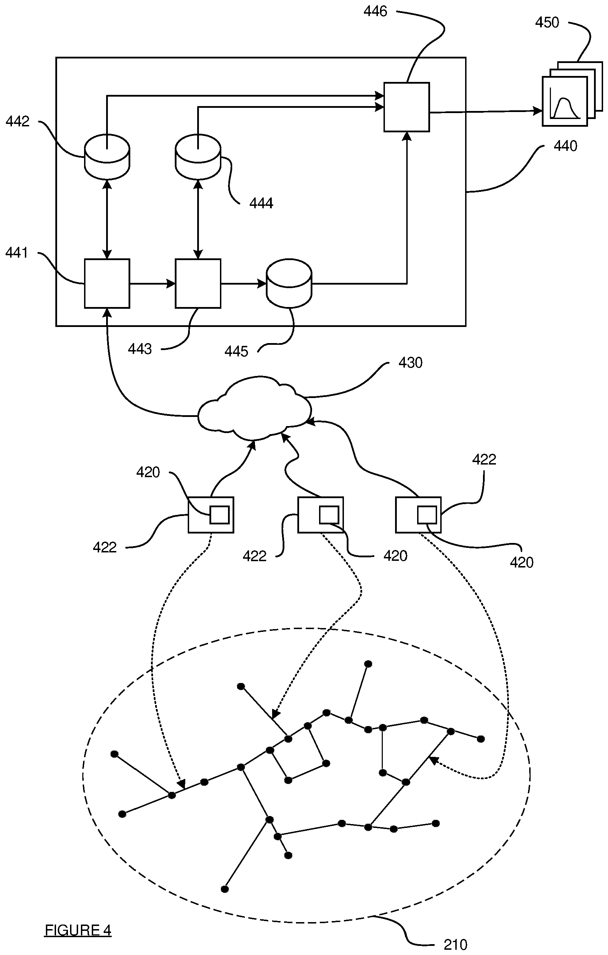

Figure 4 illustrates a plurality of navigation clients 420 located within the network 210 (the locations being indicated by the dotted arrows). Whilst figure 4 illustrates three such clients 420, it will be appreciated that this is merely an example number of clients 420 - the number, identity and location of the clients 420 may change over time. Each client 420 may be transported around the network 210 by a respective client carrier 422, e.g. a car, lorry, motorbike, or other vehicle, or a person, etc. The clients 420 are responsible for generating probe data and providing the probe data to a navigation data processing system 440. The nature of the probe data shall be described shortly. The probe data may be provided by the clients 420 to the navigation data processing system 440 via one or more communication networks (such as the network 430 illustrated in figure 4).

The clients 420 may be implemented as software and/or hardware. For example, some clients 420 may be navigation applications executing on portable devices (such as mobile telephones); some clients 420 may be dedicated navigation assistance devices (e.g. satnav devices); etc.

The probe data generated by a client 420 generally contains location information indicating a geographic location of the client 420 (e.g. GNSS information comprising a latitude, a longitude and an altitude) and a time associated with that geographic location. The probe data may contain additional information such as one or more of: an identifier of the client 420; a speed of travel of the client 420; an indication of a vehicle type (or a type of the respective client carrier 422); etc.

The nature of the clients 420 and the probe data that they generate and provide is well-known and shall not, therefore, be described in more detail herein. The clients 420 may be implemented in software and/or hardware.

The navigation data processing system 440 comprises: a probe data acquisition system 441; a probe data database 442; a map matching system 443; a map data database 444; and a traces database 445. The navigation data processing system 440 and its components may be implemented in software and/or hardware, such as one or more computer programs executing on one or more computer systems 100.

The probe data acquisition system 441 is responsible for obtaining, or acquiring, probe data that has been generated, and provided, by the clients 420 (e.g. via the network 430). The probe data acquisition system 441 may store the probe data in the probe data database 442 (e.g. as part of a record in association with an identifier of the particular client 420 that provided the probe data).

The map data database 444 stores map data. The map data may be in one or more forms or formats, may be of one or more corresponding types, and may be suitable for one or more corresponding purposes. For example, the map data may comprise data that provide a model or representation of geospatial reality for a portion of a geographical region including the network 210. Such map data may represent stationary features (such as road infrastructure features for a road network) that are relevant for vehicle navigation systems. The map data may comprise data relating to each of the navigable elements of the network 210 (e.g. location of start and/or end nodes/positions of the navigable elements; lane data for navigable elements; permitted direction and/or speed of travel data for navigable elements; etc.). Such map data is well-known and shall not, therefore, be described in more detail herein.

The map matching system 443 is arranged to receive, from the probe data acquisition system 441, probe data acquired from a client 420, and is arranged to identify, based on the map data stored in the map data database 444 and the geographic location indicated by the probe data, a navigable element on which that client 420 is currently located/travelling (and possibly a distance travelled along the identified navigable element). Likewise, the client 420 may also be arranged to identify the navigable element on which the client 420 is currently located/travelling, e.g. in order to display a location of the vehicle 422 to a user - whilst the probe data may indicate/identify the navigable element as determined by the client 420, the probe data usually, instead, comprises more raw/unprocessed data, such as data indicating a latitude, longitude and possibly altitude. Thus, in the example of roads, the map matching system 443 may determine which road (or section of road) is being travelled along (at the time indicated by the probe data) by a client 420 within a vehicle 422. The map matching system 443 may then store, or update, a "trace" within the traces database 445. A trace represents a timed sequence of navigable elements that form a journey for a client 420 - if there is no current trace for the client 420, then a new trace (identifying the just-identified navigable element and the associated time from the probe data) for that client 420 may be stored in the traces database 445 to represent the current journey; if there is a current trace for the client 420 being stored in the traces database 445, then the map matching system 443 may update that trace 420 within the traces database 445 (so that the just-identified navigable element, and the associated time from the probe data, is identified in the sequence of navigable elements that form the current journey of the client 420). The trace may comprise additional data, such as speed of travel and type of client carriers 422, which may have been obtained from, or based on, the probe data.

Methods by which the map matching system 443 may identify navigable elements corresponding to probe data, and by which the map matching system 443 may store and update traces in the traces database 445, are well-known and shall not, therefore, be described in more detail herein. Over time, many traces for a client 420 may be stored in the traces database 445 (representing different journeys undertaken by that client 420). Likewise, over time, many traces for different clients 420 may be stored in the traces database 445.

Thus in summary, as a client 420 moves around the network 210 of navigable elements, the client 420 generates and provides probe data to the navigation data processing system 440. The probe data may be stored by the navigation data processing system 440 (e.g. in the probe data database 442) and processed so as to identify the current navigable element on which that client 420 is located/travelling. Based on this, a trace (representing the current journey of the client 420) may be stored or updated in the traces database 445.

Such accumulated probe data or traces for a number different clients 420 may effectively sample (or represent) the traffic flow in a given geographical area (or road network 210). As the probe data (or the traces) are typically timestamped the sampled traffic flow may be correlated to the various external parameters (such as weather conditions, time of day, events etc.). In this way it will be understood that the various traffic state probability distributions for the road segments in the network may be determined based on the probe data (or traces). This may be done in the same way as the distributions may be calculated using the fixed sensor data described above.

As such the navigation data processing system 440 may comprise a traffic state probability module 446. The traffic state probability module is typically arranged to determine one or more traffic state probability distributions 450 for road segments of the road network 210. The traffic state probability distributions are generated based on one or more of probe data, traces for a plurality of clients 420. The traffic state probability model may also use map data in generating the traffic state probability distributions 450. It will be appreciated that the traffic state probability module 446 may implement (or use) one or more heuristic models to generate the traffic state probability distributions 450. The traffic state probability module 446 may implement (or use) one or more machine learning methods to generate the traffic state probability distributions 450. For example clustering techniques (such as k-means clustering) may be used to identify traffic states and their probabilities for probe data corresponding to a given road segment.

The user transport profile (or driving profile) for a given user may be determined based on the probe data or traces generated (or gathered) by the user's client 420. In particular, it will be appreciated that the user's driving behavior may be classified. The user's driving behavior may be dependent on traffic state and/or one or more road attributes. The user profile may specify a typical (or average or target) speed of the user for values of one or more road segment attributes. A road segment attribute may be thought of as describing (or encoding or otherwise indicating) a real-world feature of the road segment. Such attributes include any of: a vehicle restriction for the road segment; a speed limit for the road segment; a functional road class of the road segment; a width of the road segment; a slope (such as a maximum slope) of a road segment; a turn radius (such as a maximum or minimum turn radius) of a road segment; centerline (or trajectory) of the road; and so on. Examples of functional road classes include: arterial, collector, and local.

In this way the user profile may characterize a user's driving behavior according to how they typically drive on different road segments. For example, a use profile may identify a user as a fast driver who typically travels at or above the speed limit on narrow winding roads. Equally the user profile of a different user may indicate the user is a cautious driver as one who typically travels a certain amount below the speed limit on such roads.

The user profile may also comprise an indication of the user's vehicle, or mode of transport. In this way the user profile may indicate a maximum possible speed achievable due to the vehicle of mode of transport. This maximum speed may be dependent on one or more road attributes. For example, a truck may be subject to specific speed limits on highways (or motorways) which other vehicles are not.

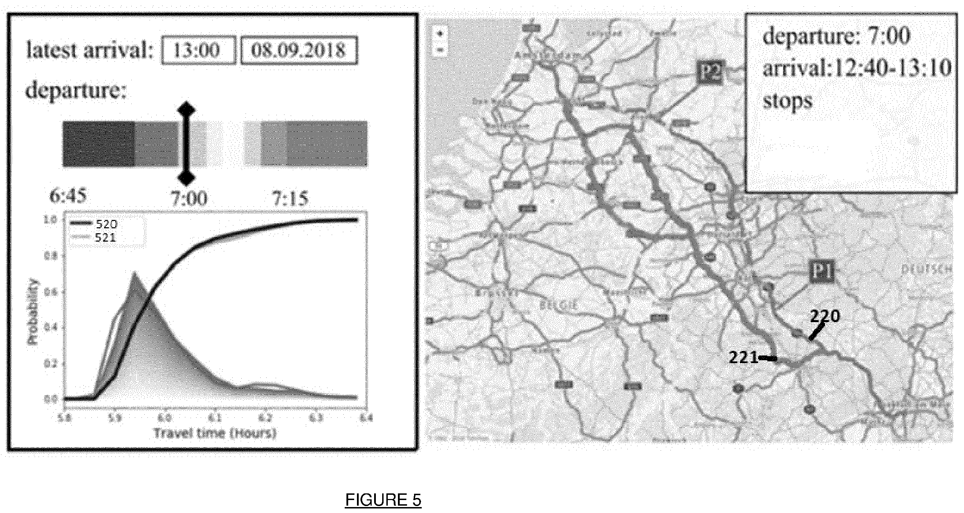

Figure 5 shows an example output of systems and methods of the invention.

In figure 5 two potential routes 220; 221 are shown plotted on an electronic map. In this simulation the user is truck driver who has chosen the latest arrival time at 13:00 on the 08.09.2018. The color code (rendered as greyscale in the figure) below the latest arrival time illustrates the likeliness of arrival, with blue (dark grey) likely to arrive in time, red (light grey) likely to be too late. The predicted journey time is shown as a departure time of 07:00 and a likely arrival time with a confidence interval (i.e. between 12:40 and 13:10). Also shown are the probability distributions 520;521 for the first and second route respectively, along with the cumulative distributions 530; 531 for the journey times of the first and second routes respectively.

In this way the system allows the user to set off at the optimum time using the optimum route to reach their destination at a required time. As the journey times are generated using the suer own driving profile the journey times provide a level of accuracy otherwise unavailable to the user. In systems of the prior art it is likely that the journey times would be significantly underestimated for this user who is a cautions driver, driving a truck.

It will be appreciated that the methods described have been shown as individual steps carried out in a specific order. However, the skilled person will appreciate that these steps may be combined or carried out in a different order whilst still achieving the desired result.

It will be appreciated that embodiments of the invention may be implemented using a variety of different information processing systems. In particular, although the figures and the discussion thereof provide an exemplary computing system and methods, these are presented merely to provide a useful reference in discussing various aspects of the invention. Embodiments of the invention may be carried out on any suitable data processing device, such as a personal computer, laptop, personal digital assistant, mobile telephone, set top box, television, server computer, etc. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or other hardware arrangements. Method steps implemented in flowcharts contained herein, or as described above, may each be implemented by corresponding respective modules; multiple method steps implemented in flowcharts contained herein, or as described above, may be implemented together by a single module.

It will be appreciated that, insofar as embodiments of the invention are implemented by a computer program, then a storage medium and a transmission medium carrying the computer program form aspects of the invention. The computer program may have one or more program instructions, or program code, which, when executed by a computer carries out an embodiment of the invention. The term "program" as used herein, may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

## Claims

1. A method of predicting a journey time for a user traversing a route, wherein the route comprises a plurality of road segments, the method comprising:
calculating a plurality of potential journey times for the route, said calculating comprising, for each potential journey time of the plurality:
stochastically generating a respective route state for the route, wherein a route state comprises for each road segment of the route, a respective traffic state for said road segment selected from a plurality of traffic states, and
determining said potential journey time of the route state wherein the potential journey time is based on a driving profile of the user and the traffic states of the road segments of the respective route state;
predicting the journey time for user traversing the route based on the plurality of potential journey times for the route.

2. The method of claim 1 wherein the plurality of route states comprises one or more non-limiting traffic states and one or more limiting traffic states.

3. The method of claim 2 wherein the one or more limiting traffic states are any of: congested traffic, or synchronized traffic.

4. The method of claim 2 wherein said determining is based at least in part on a respective road restriction for at least one of the road segments in a non-limiting traffic states is a road restriction.

5. The method of claim 4 wherein the road restriction is any of: a speed restriction, a traffic control system, a road class, or a road condition.

6. The method of any preceding claim wherein the step of predicting comprises calculating an indication of confidence for the journey time for user traversing the route.

7. The method of claim 6 wherein the indication of confidence is any one of: a confidence interval; or a likelihood of the user traversing the route within the journey time.

8. The method of any preceding claim wherein said generating comprises, for each road segment of a potential route state, selecting the respective traffic state for said road segment from the plurality of traffic states, based on a traffic state probability associated with said road segment.

9. The method of claim 8 wherein the traffic state probability associated with at least one road segment is dependent on at least the traffic state of another road segment of the potential route state.

10. The method of claim 8 or 9 wherein the traffic state associated with at least one road segment is dependent on at least one of:
a predicted time of day for traversing the road segment;
predicted weather conditions for the road segment; or
a known event associated with the road segment.

11. The method of any preceding claims wherein the driving profile of the user comprises any of: the mode of transport of the user; the vehicle of the user; or a driver behavior of the user.

12. The method of any preceding claims wherein potential journey times are calculated until a convergence threshold is reached.

13. The method of claim 12 wherein the convergence threshold comprises any of: convergence criteria for the distribution of the plurality of potential journey times; a predetermined number of potential journey times; or a predetermined variance of the plurality of potential journey times.

14. An apparatus arranged to carry out a method according to any one of claims 1 to 13.

15. A computer-readable medium storing a computer program which, when executed by computer processor, causes the computer to carry out a method according to any one of claims 1 to 13.
